# EUROPÄISCHE PATENTSCHRIFT

(11) **EP 1 710 044 B1**
(45) Veröffentlichungstag und Bekanntmachung des Hinweises auf die Patenterteilung: **15.04.2009**
(21) Anmeldenummer: 06006203.1
(22) Anmeldetag: 25.03.2006
(51) Int. Cl.: B23P 21/00

(54) **Montagestation mit einem drehbeweglich antreibbaren Rundtisch**
Assembling station with a rotatably driven round table
Station de montage avec une table ronde éntraînée de façon rotative

(30) Priorität: 08.04.2005 DE 202005005541 U
(43) Veröffentlichungstag der Anmeldung: 11.10.2006
(73) Patentinhaber: Sigma AG, 6371 Stans (CH)
(72) Erfinder: von Moos, Alfred, 6312 Steinhausen ZG (CH)
(74) Vertreter: Luchs, Willi

(56) Entgegenhaltungen:
- EP-A- 0 048 677
- DE-A1- 19 842 999
- US-A- 5 784 932
- US-A1- 2003 182 795

## Beschreibung

Die Erfindung betrifft eine Montagestation mit einem drehbeweglich antreibbaren Rundtisch gemäss dem Oberbegriff des Anspruches 1.

Derartige Montagestationen mit einem drehbeweglich antreibbaren Rundtisch, mit einer Anzahl von auf dem Rundtisch segmentflörmig nebeneinander angeordneten Werkstückträgern sowie mit einer Anzahl von zentral angeordneten und mit dem Rundtisch mitdrehenden Behältern zur Bereitstellung der auf den Werkstückträgern zu montierenden Teile sind bekannt und werden als sogenannte Halbautomaten zum Durchführen von manuellen Montageprozessen (mechanisierte Montagehandarbeitsplätze) verwendet. Der Rundtisch wird als ein Rundschalttisch bei einer bestimmten Teilung in einem bestimmten Rundtakt angetrieben, wobei mit einer Getriebeübersetzung auch z.B. zwei verschiedene Teilungen (beispielsweise eine 12er- und eine 24er-Teilung) vorgesehen sein können. Für ein bestimmtes Produkt und einen bestimmten Montageablauf muss eine bestimmte Montagestation entsprechend konzipiert werden.

Das Dokument EP-A-0 048 677 offenbart eine Montagestation mit einem dreh-beweglich antreibbaren Rundtisch, mit einer Anzahl von auf dem Rundtisch segmentförmig nebeneinander angeordneten Werkstückträgern sowie mit einer Anzahl von zentral angeordneten und mit dem Rundtisch vorzugsweise mitdrehenden Behältern zur Bereitstellung der auf den Werkstückträgern zu montierenden Teile. Die Werkstückträger sind wechselbar zur Anpassung der Teilung der Montagestation auf die verschiedenen Montagearbeiten. Damit ist aber eine Automation bei der Montage nicht geschaffen. Es ergibt sich somit eine geringe Flexibilität und auch die Umrüstzeit ist beträchtlich.

Gemäss dem Dokument DE-A-198 42 999 ist es bekannt, für eine Montagestation mit einer den Rundtischantrieb über eine Servosteuerung steuerbaren Servomotorantrieb vorzusehen, mittels welchem der Rundtisch (Ringtisch 14) um einen beliebigen Winkel im beliebigen Rundtakt verdrehbar ist. Mit dieser Anordnung eines Rundtischantriebes ist aber eine vollautomatisierte Montagestation geschaffen.

Der vorliegenden Erfindung liegt die Aufgabe zugrunde, eine Montagestation der eingangs genannten Art zu schaffen, die eine hohe Flexibilität bei möglichst niedriger Umrüstzeit aufweist und einen zeitoptimierten Montageprozess ermöglicht.

Diese Aufgabe wird erfindungsgemäss durch eine Montagestation mit den Merkmalen des Anspruches 1 gelöst.

Weitere bevorzugte Ausgestaltungen der erfindungsgemässen Montagestation bilden den Gegenstand der abhängigen Ansprüche.

Die erfindungsgemässe Montagestation, bei der für den Rundtischantrieb ein über eine Servosteuerung, Servomotorantrieb oder einem anderweitig frei programmierbaren Antriebskonzept vorgesehen ist, mittels welchem der Rundtisch um einen beliebigen Winkel im beliebigen Rundtakt oder kontinuierlich verdrehbar ist, ist für unzählige Produktevarianten geeignet. Sie erlaubt eine freie Programmierung der Teilung und automatische Festlegung der optimalen Taktzeit. Zudem kann der mit Werkstückträgern versehen Rundtisch auch kontinuierlich im Uhr- oder Gegenuhrzeigersinn verdreht werden, was eine rasche Zuführung des Produktes beispielsweise zu einer Reparaturstation oder zu einer anderen Montagestelle, die z.B. zum automatisierten Ausführen bestimmter Montageschritte vorgesehen ist.

Die Erfindung wird nachfolgend anhand der Zeichnung näher erläutert. Es zeigen rein schematisch:
Fig. 1 eine Montagestation in perspektivischer Darstellung;
Fig. 2 einen Rundtischantrieb; und
Fig. 3 eine Montagestation in Draufsicht.

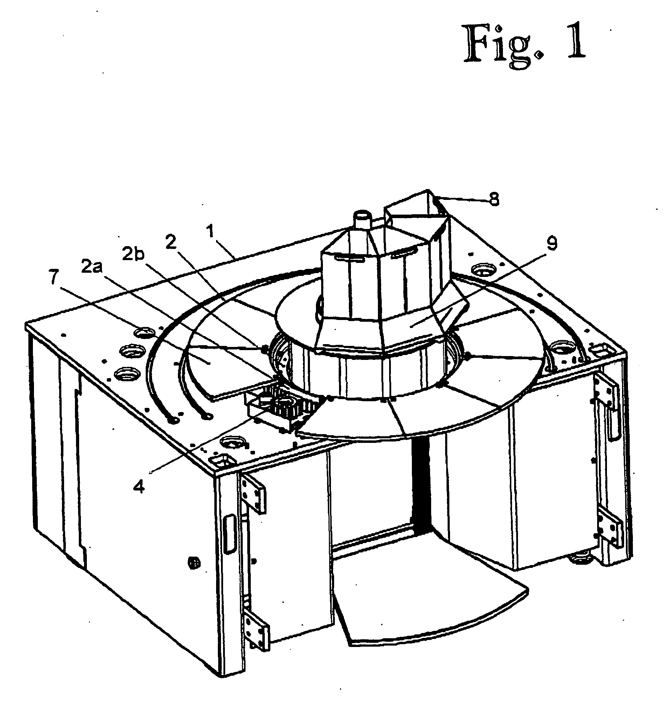

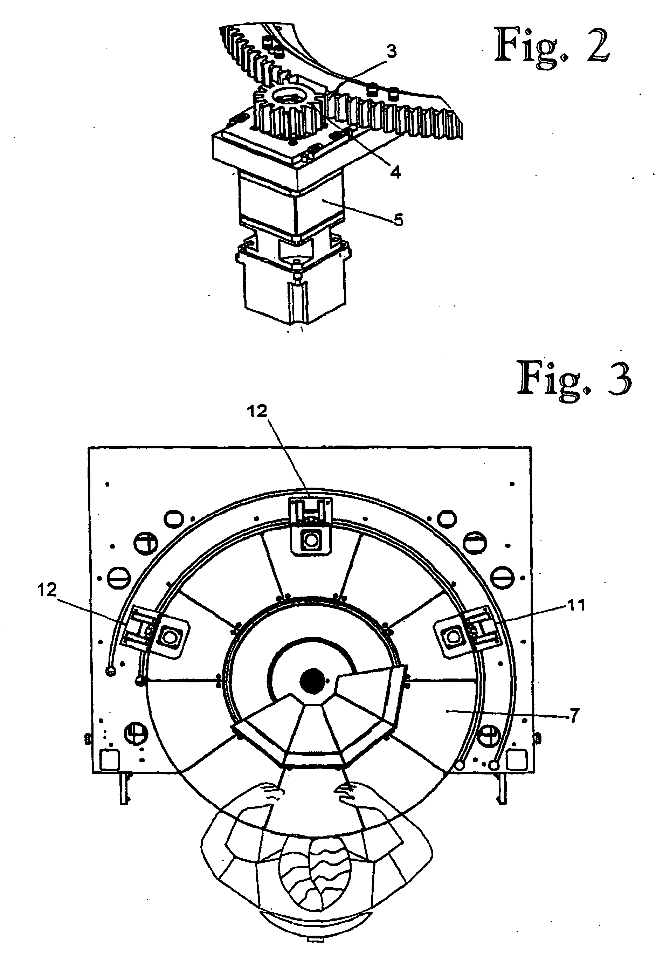

Fig. 1 zeigt eine Montagestation 1 mit einem drehbeweglich angetriebenen Rundtisch 2, der einen Drehring 2a sowie einen zentralen ebenfalls drehbaren Teil 2b aufweist. Der Drehring 2a ist mit einem aus Fig. 2 ersichtlichen Kranz 3 versehen, der mit einem einem Servomotor 5 zugeordneten Antriebsritzel 4 im Eingriff steht. Die Übertragung von der Antriebseinheit auf den Drehtisch erfolgt formschlüssig.

Auf dem Rundtisch 2 bzw. dem Drehring 2a desselben ist eine Anzahl von segmentförmig nebeneinander angeordneten, vorzugsweise aus Aluminium hergestellten Werkstückträgern 7 befestigt, welche ungleiche Winkelteilungen aufweisen können. Auf dem zentralen Teil 2b des Rundtisches 2 ist eine Anzahl von Behältern 8 für die zu montierenden Teile angeordnet. Mit Vorteil sind unterhalb von den Behältern 8 zu den Werkstückträgern 7 gerichtete Entnahmefächer 9 angeordnet, in welche die Behälter 8 von oben münden. Die Behälter 8 kann man aber auch in Richtung zu den Werkstückträgern 7 hin öffnen.

Der Rundtisch 2 mit den Werkstückträgern 7 und den Behältern 8 ist gegenüber einer Montagestelle relativ verdrehbar, die in Fig. 3 mit 10 bezeichnet ist, und die der Person zugeordnet ist, welche die einzelnen Montageschritte manuell durchführt. Die Behälter 8 mit den Entnahmefächer 9 können per Servomotorantrieb oder einem anderweitig frei programmierbaren Antriebskonzept gegenüber dem Werkstückträger so verdreht werden, dass für eine definierte Montagearbeit die dazugehörigen Montageteile angeliefert werden können. Beispielsweise kann nach einer Vormontage der Drehringe 2b so verdreht werden, dass gleich anschliessend die Endmontage durchgeführt werden kann.

Erfindungsgemäss wird der Drehantrieb mittels des bereits erwähnten, Servomotorantriebs 5 oder einem anderweitig frei programmierbaren Antriebskonzept bewerkstelligt, und zwar in Zusammenwirkung mit einer aus der Zeichnung nicht ersichtlichen Servosteuerung, wobei der Rundtisch um einen beliebigen Winkel im beliebigen Rundtakt und vorzugsweise in beiden Drehrichtungen angetrieben werden kann. Dabei kann die Teilung frei programmiert und die optimale Taktzeit automatisch festgelegt werden. Je nach gewünschter Montagereihenfolge können die verschiedenen Bauteile zu der Montagestelle 10 vorgefahren werden, wobei auch z.B. zuerst eine Vormontage und danach die Montage der vormontierten Stücke beliebig durchgeführt werden kann.

Wie in Fig. 3 angedeutet, kann die Montagestation neben der Montagestelle 10 weitere Montagestellen 11, 12, 13 umfassen. So kann beispielsweise eine der Montagestellen eine Reparaturstation 11 zum Nachholen von fehlenden oder Korrigieren von fehlerhaften Montageschritten bilden. Der erfindungsgemässe Servomotorantrieb erlaubt dabei auch eine kontinuierliche Drehbewegung z.B. zu dieser Reparaturstation 11, und zwar in beiden Drehrichtungen. Ferner kann die Montagestation Montagestellen 12, 13 umfassen, an denen bestimmte Montageschritte automatisiert ausgeführt werden können. Auch hier kann die Zuführung kontinuierlich in beiden Drehrichtungen erfolgen.

Es wäre zwar durchaus denkbar, mehrere Montagestellen 10 für die manuelle Montage vorzusehen, jedoch ist es von Vorteil, wenn die gesamte Montage von der gleichen Person durchgeführt wird, die dann nicht an einen bestimmten Takt gebunden ist.

Für den Rundtisch 2 ist eine inkrementale Positionsmessung vorgesehen und mit der Servosteuerung wirkverbunden, dank welcher eine hohe Positioniergenauigkeit für das Produkt erreicht werden kann. Bei einem Durchmesser des Rundtisches von 1100 mm, einer Gewichtbelastung von 250 kg auf den Werkstückträgern 7 und einer 10er-Teilung beträgt die Schaltzeit 1,4 Sekunden. Die effektive Positioniergenauigkeit für das Produkt beträgt ± 0,075 mm.

Falls für den Rundtischantrieb ein über eine frei programmierbare Antriebssteuerung steuerbarer Antrieb vorgesehen ist, mittels welchem der Rundtisch (2) um einen beliebigen Winkel im beliebigen Rundtakt oder kontinuierlich verdrehbar ist, eignet sich beispielsweise ein steuerbarer Elektromotor oder ähnlichem.

Der drehbare zentrale Teil 2b, auf dem die Behälter 8 stehen, könnte ebenfalls durch eine Antriebssteuerungsanordnung verstellbar angeordnet sein.

## Patentansprüche

1. Montagestation mit einem drehbeweglich antreibbaren Rundtisch (2), mit einer Anzahl von auf dem Rundtisch (2) segmentförmig nebeneinander angeordneten Werkstückträgern (7) sowie mit einer Anzahl von zentral angeordneten und mit dem Rundtisch (2) vorzugsweise mitdrehenden Behältern (8) zur Bereitstellung der auf den Werkstückträgern (7) zu montierenden Teile, **dadurch gekennzeichnet, dass**
für den Rundtischantrieb ein über eine Servosteuerung steuerbarer Servomotorantrieb (5) oder ein über eine frei programmierbare Antriebssteuerung steuerbarer Antrieb vorgesehen ist, mittels welchem der Rundtisch (2) um einen beliebigen Winkel im beliebigen Rundtakt oder kontinuierlich in beiden Drehrichtungen verdrehbar und zudem eine inkrementale Positionsmessung des Rundtisches (2) vorgesehen ist, dass der drehbare zentrale Teil (2b), auf dem die Behälter (8) stehen, durch eine Antriebssteuerungsanordnung verstellbar angeordnet ist, wobei dem Rundtisch (2) mindestens zwei Montagestellen (10, 11) zugeordnet sind, von denen eine zum manuellen Durchführen einzelner Montageschritte und die andere zum automatisierten Ausführen bestimmter Montageschritte vorgesehen ist und/oder eine Reparaturstation (11) zum Nachholen von fehlenden oder Korrigieren von fehlerhaften Montageschritten bildet.

2. Montagestation nach Anspruch 1, **dadurch gekennzeichnet, dass** der Rundtisch (2) gegenüber mindestens einer Montagestelle (10, 11, 1.2, 13) relativ verdrehbar ist.

## Claims

1. Assembly station with a rotationally drivable revolving table (2), with a number of work piece holders (7) adjoining each other and segment shaped arranged on the revolving table (2) and with a number of uppers (8) centrally positioned and preferably rotating with the revolving table (2) for the supply of parts mountable on the work piece holders (7), **characterized in that**
a servo motor drive (5) controllable by a servo control or a controllable drive by a free programmable drive control is provided for the drive of the rotary table, with which the revolving table (2) is rotatable in any variable angle in any variable revolving tact or continuously in both rotation directions and moreover is provided with an incremental position measurement of the revolving table (2), that the rotatable central part (2b), on which the uppers (8) stand, is adjustably arranged by an arrangement of a drive control, whereby at least two assembly places (10, 11) are allocated to the revolving table (2), from which one is provided for the manually carry out of single mounting steps and the other for the automated carry out of certain mounting steps, and/or a repairing station (11) for catching up of missing or correction of inaccurate mounting steps.

2. Assembly station according to claim 1, **characterized in that** the revolving table (2) is relatively rotatable compared to at least one assembly place (10, 11, 12, 13).

## Revendications

1. Poste de montage comprenant une table ronde (2) pouvant être entraînée en rotation, comportant un nombre de supports de pièces (7) disposés en forme de segments les uns à côté des autres sur la table ronde (2), ainsi qu'un nombre de récipients (8) disposés de façon centrale, accompagnant de préférence le mouvement de rotation de la table ronde (2), permettant de mettre à disposition les composants à assembler sur les supports de pièces (7),
**caractérisé en ce que**
l'entraînement de la table ronde est assuré par un entraînement par servomoteur (5) pouvant être piloté par l'intermédiaire d'une commande d'asservissement, ou par un entraînement piloté par l'intermédiaire d'une commande d'entraînement librement programmable, au moyen duquel la table ronde (2) peut être entraînée en rotation, soit par cycles de rotation quelconques couvrant un angle quelconque, soit de façon continue, dans les deux sens de rotation, et qu'en outre une mesure de position incrémentale de la table ronde (2) est prévue, que la partie tournante centrale (2b), sur laquelle sont placés les récipients (8), est aménagée pour pouvoir être positionnée par l'intermédiaire d'un dispositif de commande d'entraînement, au moins deux positions de montage (10, 11) étant associées à la table ronde (2), positions dont l'une est prévue pour l'exécution manuelle de différentes étapes de montage, et l'autre est prévue pour l'exécution automatique de certaines étapes de montage, et/ou forme un poste de retouche (11) permettant de rattraper des étapes de montage manquantes ou de corriger des étapes de montage non conformes.

2. Poste de montage selon la revendication 1,
**caractérisé en ce que**
la table ronde (2) peut être entraînée en rotation par rapport à au moins une position de montage (10, 11, 12, 13).
